# EUROPÄISCHE PATENTSCHRIFT

(11) **EP 0 941 194 B1**
(45) Veröffentlichungstag und Bekanntmachung des Hinweises auf die Patenterteilung: **05.06.2002**
(21) Anmeldenummer: 97952801.5
(22) Anmeldetag: 26.11.1997
(51) Int. Cl.: B62D 5/083

(54) **RÜCKWIRKUNGSANORDNUNG AN EINER SERVOVENTILANORDNUNG**
FEEDBACK SYSTEM FOR A SERVO VALVE SYSTEM
SYSTEME DE RETROACTION SUR UN SYSTEME DE SERVO-VALVE

(30) Priorität: 05.12.1996 DE 19650474
(43) Veröffentlichungstag der Anmeldung: 15.09.1999
(73) Patentinhaber: Mercedes-Benz Lenkungen GmbH, 40476 Düsseldorf (DE)
(72) Erfinder: SCHICK, Bernd, D-73650 Winterbach (DE); LANGKAMP, Bernd, D-73669 Lichtenwald (DE); BREUNING, Edwin, D-73770 Denkendorf (DE); KÖHLER, Karl-Hans, D-73249 Wernau (DE)
(74) Vertreter: Dahmen, Toni, Dipl.-Ing.
(86) Internationale Anmeldenummer: EP9706581
(87) Internationale Veröffentlichungsnummer: WO9824678

(56) Entgegenhaltungen:
- GB-A- 2 199 000

## Beschreibung

Die Erfindung betrifft eine Rückwirkungsanordnung an einer nach Art einer Drehschieberanordnung ausgebildeten hydraulischen Servoventilanordnung, welche einen Drehschieber sowie eine diesen koaxial umfassende, relativ zum Drehschieber drehbare Steuerbuchse aufweist und insbesondere für Servolenkungen von Kraftfahrzeugen vorgesehen ist.

Hydraulische Servolenkungen werden in die meisten Kraftfahrzeuge serienmäßig eingebaut. Dabei ist es grundsätzlich bekannt, die am Lenkhandrad spürbare bzw. bei Lenkmanövern aufzubringende Handkraft parameterabhängig zu verändern, um beispielsweise die Lenkung bei hoher Geschwindigkeit etwas schwergängiger und bei geringer Geschwindigkeit, insbesondere innerhalb eines für Rangiermanöver typischen Geschwindigkeitsbereiches, besonders leichtgängig zu machen. Zu diesem Zweck werden sogenannte Rückwirkungsanordnungen eingesetzt, durch die sich die für eine Verstellung der Servoventilanordnung notwendige Kraft verändern läßt. Im Falle einer nach Art einer Drehschieberanordnung ausgebildeten Servoventilanordnung ist dies gleichbedeutend damit, daß sich die für eine Verdrehung von Drehschieber und Steuerbuchse relativ zueinander notwendige Kraft steuerbar variieren läßt.

In diesem Zusammenhang wurde gemäß der (nicht vorveröffentlichten) DE 196 16 439 A1 schon vorgeschlagen, an einem mit dem Drehschieber drehfest verbundenen drehschieberseitigen Wellenteil Axialnuten mit sich nach radial außen V-förmig spreizenden Flanken anzuordnen und an einem mit der Steuerbuchse drehfest verbundenen Buchsenabschnitt, welcher das vorgenannte Wellenteil koaxial umfaßt, Radialführungen für in die Axialnuten eindrückbare Rückwirkungskörper anzuordnen, wobei dann die Rückwirkungskörper mit parameterabhängig steuerbarem Hydraulikdruck beaufschlagbar sind, so daß sie sich mit steuerbarer Kraft in die Axialnuten einzusenken suchen und damit einer Relativdrehung zwischen Wellenteil und Buchsenabschnitt einen steuerbaren Widerstand entgegensetzen, welcher auch von der Form der Rückwirkungskörper, z.B. Kugeln, sowie der Steilheit der Flanken der Axialnuten abhängig ist.

Aus der GB 2 199 000 A, die dem Oberbegriff des Anspruchs 1 entspricht, ist eine Rückwirkungsanordnung einer hydraulischen Servoventilanordnung bekannt, die einen Drehschieber und eine Steuerbuchse aufweist, wobei die Steuerbuchse den Drehschieber koaxial umfasst und relativ zu diesem drehbare ausgeführt ist. Die Rückwirkungsanordnung besitzt ein relativ zum Drehschieber drehfestes Wellenteil, an dem axiale Nuten mit nach außen V-förmig gespreizten Flanken ausgebildet sind. Des weiteren weist diese Rückwirkungsanordnung ein relativ zur Steuerbuchse drehfestes Buchsenteil auf, an dem Radialbohrungen zur Radialführung von Rückwirkungskörpern angeordnet sind, welche mit steuerbarem Hydraulikdruck in die Nuten eindrückbar sind.

Bei einer aus der DE 42 34 571 A1 bekannten Servolenkung ist eine Zentriereinrichtung für das Servoventil vorgesehen, welche einen zwischen einer Eingangswelle und einer Ausgangswelle eingespannten Drehstab aufweist. Da der Drehstab keine exakte Mittenzentrierung zwischen einem Drehschieber und einer Ventilbuchse zuläßt, ist ein als Wellfeder ausgeführtes Federelement vorgesehen, welches durch Schweißpunkte mit einem im Drehschieber festen Ring verbunden ist. Das Federelement trägt ein mit Schrägflächenpaaren versehenes Zentrierstück, welches unter Vorspannung gegen Wälzkörper gedrückt wird. Die Wälzkörper stützen sich in entsprechenden Schrägflächenpaaren eines weiteren Zentrierstückes ab, das über ein Verbindungsteil für den Drehstab mit der Abtriebswelle verbunden ist. Bei Verdrehung von Eingangswelle und Ausgangswelle relativ zueinander wird durch das Zusammenwirken der Wälzkörper mit den vorgenannten Schrägflächen der Zentrierstücke eine Axialkraft erzeugt, die in eine Rückstellkraft umgewandelt wird und für eine exakte Einstellung des Ventils in seine Mittellage sorgt.

Die DE 43 29 999 C1 betrifft ein Servoventil mit axial verschiebbarer Steuerhülse. Dabei besteht das Ventil aus einer Eingangswelle, einer Ausgangswelle, einem Torsionsstab, der mit einem Ende mit der Eingangswelle und mit dem anderen Ende mit der Ausgangswelle verbunden ist, einer die Eingangswelle umgebenden Ventilhülse und einer zwischen der Ventilhülse und der Eingangswelle angeordneten, in Abhängigkeit von einer Drehung der Eingangswelle axial verschiebbaren Steuerhülse, wobei in der Ventilhülse und an der axial verschiebbaren Steuerhülse angeordnete Steuernuten hydraulisch zusammenwirken. Diese Steuernuten sind derart angeordnet, daß in Mittelstellung des Servoventils der Hydraulikfluß unterbrochen ist. Durch ein am Servoventil angeordnetes Stellelement wird auf die Steuerhülse eine der Axialverschiebung entgegenwirkende Kraft ausgeübt, wenn die aus dem am Stellglied wirkenden Druck resultierende Kraft ein vorgegebenes Verhältnis zu der auf die Eingangswelle wirkenden Kraft erreicht.

Aufgabe der Erfindung ist es nun, eine vorteilhafte Konstruktion für eine Rückwirkungsanordnung der eingangs angegebenen Art aufzuzeigen.

Diese Aufgabe wird dadurch gelöst, daß neben dem vorangehend beschriebenen Wellenteil und dem zugeordneten Buchsenteil ein das Buchsenteil umfassendes Gehäuse mit zumindest einer Radialöffnung vorgesehen ist, durch die die Rückwirkungskörper bei entsprechend positioniertem Buchsenteil in dessen Radialbohrungen einsetzbar sind, wobei das Gehäuse und das Buchsenteil relativ zueinander zwischen einer Montagelage, in der die gehäuseseitige Radialöffnung sowie die Radialbohrungen des Buchsenteiles in einer gemeinsamen Radialebene bezüglich der Buchsenachse liegen, und einer Betriebslage axial verstellbar sein können, in der die Radialöffnung zu den Radialbohrungen axial vesetzt ist und sich die Rückwirkungskörper keinesfalls riegelartig in die Radialöffnung einschieben können.

Die Erfindung beruht auf dem allgemeinen Gedanken, die Rückwirkungskörper erst nach Montage des drehschieberseitigen Wellenteiles sowie des steuerbuchsenseitigen Buchsenteiles im Gehäuse anzuordnen, welches dann die Rückwirkungskörper käfigartig umfassen kann.

Damit wird gleichzeitig der Vorteil geboten, daß der Wellenteil mit den axialen Nuten einen größeren und insbesondere im Vergleich zum Drehschieber großen Durchmesser aufweisen kann und das erzeugbare Drehmoment entsprechend groß ist.

Die Radialöffnung kann gegebenenfalls eine Doppelfunktion übernehmen, indem sie einerseits für das Einsetzen der Rückwirkungskörper und andererseits als hydraulische Anschlußöffnung dient, über die die Rückwirkungskörper mit dem parameterabhängig steuerbaren hydraulischen Druck für die Rückwirkungssteuerung beaufschlagt werden.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung beschrieben werden.

Dabei zeigt
- Fig. 1: einen schematisierten Axialschnitt des Servoventiles sowie der Rückwirkungsanordnung,
- Fig. 2: ein Schnittbild entsprechend der Schnittlinie II-II in Fig. 1,
- Fig. 3: ein Diagramm, welches den wirksamen Hydraulikdruck des Servomotors in Abhängigkeit von dem am Lenkhandrad aufzubringenden Handmoment darstellt, und
- Fig. 4: verschiedene Möglichkeiten der Anordnung von Rückwirkungskugeln.

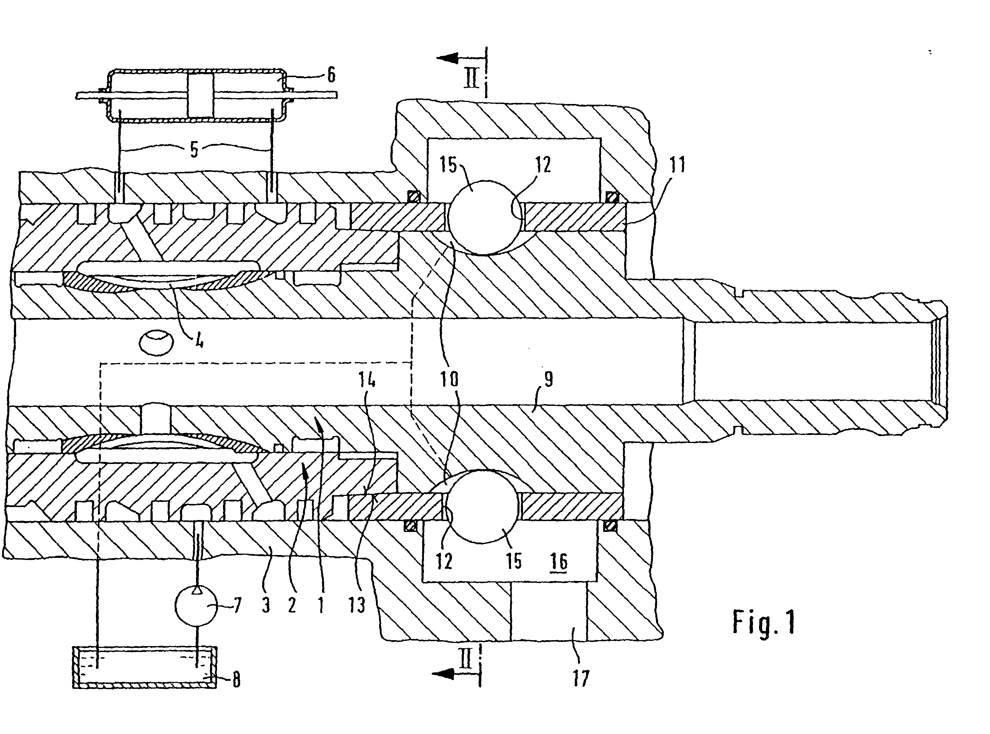

In Fig. 1 wird ein Drehschieber 1 von einer dazu koaxialen Steuerbuchse 2 aufgenommen, die innerhalb eines Gehäuses 3 drehbar angeordnet ist. Der Drehschieber 1 und die Steuerbuchse 2 lassen sich relativ zueinander begrenzt verdrehen, wodurch miteinander zusammenwirkende, am Drehschieber 1 bzw. an der Steuerbuchse 2 angeordnete axiale Steuerkanten 4 relativ zueinander verstellt werden. Damit wird zwischen zwei Motoranschlüssen 5, die mit den beiden Seiten eines als doppeltwirkendes Kolben-Zylinder-Aggregat ausgebildeten Servomotors 6 verbunden sind und hydraulisch zwischen einem Anschluß für die Druckseite einer Hydraulikpumpe 7 und einem Anschluß für ein mit der Saugseite der Pumpe 7 verbundenes Hydraulikreservoir 8 angeschlossen sind, eine steuerbare Druckdifferenz in der einen oder anderen Richtung aufgebaut, so daß der Servomotor 6 eine entsprechende Servokraft in der einen oder anderen Richtung erzeugt.

Im Falle einer Servolenkung eines Kraftfahrzeuges ist der Drehschieber 1 (oder die Steuerbuchse 2) mechanisch mit einem nicht dargestellten Lenkhandrad und die Steuerbuchse 2 (oder der Drehschieber 1) mechanisch mit den Fahrzeuglenkrädern verbunden. Der Drehschieber 1 und die Steuerbuchse 2 sind miteinander in weiter unten dargesteller Weise so gekoppelt, daß sie eine begrenzte Relativdrehung relativ zueinander ausführen können, deren Maß von dem zwischen Lenkhandrad und Fahrzeuglenkrädern übertragenen Drehmoment abhängt. Im Ergebnis erzeugt somit der Servomotor 6 eine von dem zwischen Lenkhandrad und Fahrzeuglenkrädern übertragenen Drehmoment abhängige Servokraft, durch die die am Lenkhandrad aufzubringende Handkraft vermindert wird.

Dies ist grundsätzlich bekannt.

Der Drehschieber 1 besitzt eine von seinen Steuerkanten 4 axial beabstandeten Wellenabschnitt 9, welcher im Vergleich zum Drehschieber 1 einen vergrößerten Durchmesser aufweisen kann und auf seinem Umfang mit gleichförmig verteilten axialen V-Nuten 10 versehen ist, die jeweils in ihrem axial mittleren Abschnitt eine maximale Tiefe erreichen, welche zu den axialen Enden der V-Nuten 10 kontinuierlich abnimmt.

An die Steuerbuchse 2 schließt ein den Wellenabschnitt 9 umfassendes Buchsenteil 11 an, welches eine der Anzahl der V-Nuten entsprechende Anzahl von Radialbohrungen 12 aufweist. Das Buchsenteil 11 ist so mit der Steuerbuchse 2 drehfest verbunden, daß die Mittelachsen der Radialbohrungen 12 jeweils in einer die Längsmittellinie einer V-Nut 10 enthaltenden Axialebene des Drehschiebers 1 enthalten sind, wenn Drehschieber 1 und Steuerbuchse 2 ihre Mittellage relativ zueinander einnehmen, in der die Motoranschlüsse 5 gleiche hydraulische Drücke aufweisen.

Das Buchsenteil 11 und die Steuerbuchse 2 können dadurch in einer entsprechenden Relativlage miteinander verbunden sein, daß das Buchsenteil 11 mit einem an ihm angeordneten Innenkonus 13 auf einem an der Steuerbuchse 2 vorhandenen Außenkonus 14 verpreßt ist. Durch diese Verbindung wird eine exakte Justage des Buchsenteiles 11 relativ zur Steuerbuchse 2 ermöglicht.

In den Radialbohrungen 12 sind Kugeln 15 verschiebbar aufgenommen, welche sich in weiter unten dargesteller Weise durch hydraulische Druckbeaufschlagung mit mehr oder weniger großer Kraft in die V-Nuten 10 eindrücken lassen.

Innerhalb des Gehäuses 3 ist eine breite Innenumfangsnut ausgebildet, welche einen Ringraum 16 bildet, welcher den Bereich der Kugeln 15 sowie der zugehörigen Radialbohrungen 12 des Buchsenteiles 11 umfaßt und sich axial bis zu einer Radialöffnung 17 im Gehäuse 3 erstreckt. Der Durchmesser des Ringraumes 16 ist so bemessen, daß die Kugeln 15 zwar mehr oder weniger weit nach radial außen aus den Radialbohrungen 12 auszutreten vermögen, jedoch dabei die zugeordneten Radialbohrungen 12 nicht verlassen können.

Bei der Montage von Drehschieber 1 und Steuerbuchse 2 im Gehäuse 3 können der Drehschieber 1 und die Steuerbuchse 2 mit dem Wellenabschnitt 9 und dem Buchsenteil 11 zunächst innerhalb des Gehäuses 3 in eine Axiallage gebracht werden, in der die Radialbohrungen 12 und die Radialöffnung 17 in einer gemeinsamen Radialebene liegen. Durch entsprechende Dreheinstellung von Drehschieber 1 und Steuerbuchse 2 läßt sich dann erreichen, daß jeweils eine Radialbohrung 12 sowie eine V-Nut 10 mit der Radialöffnung 17 in einer gemeinsamen Axialebene des Drehschiebers 1 liegen und eine Kugel 15 in die jeweilige Radialbohrung 12 sowie die zugeordnete V-Nut 10 eingebracht werden kann. Danach werden der Drehschieber 1 und die Steuerbuchse 2 gemeinsam weitergedreht, derart, daß wiederum eine Radialbohrung 12 und eine V-Nut 10 auf die Radialöffnung 17 ausgerichtet sind usw. Sobald alle Radialbohrungen 12 und die zugehörigen V-Nuten 10 mit Kugeln 15 bestückt worden sind, werden der Drehschieber 1 und die Steuerbuchse 2 axial in die in Fig. 1 dargestellte Normallage verschoben. Damit werden die Kugeln 15 unverlierbar in den zugeordneten Radialbohrungen 12 festgehalten.

Der Ringraum 16 kann, z.B. über die Radialöffnung 17, mit einem parameterabhängig steuerbaren hydraulischen Druck beaufschlagt werden. Die V-Nuten 10 kommunizieren in nur schematisch dargestellter Weise mit dem relativ drucklosen Hydraulikreservoir 9, so daß sich die Kugeln 15 durch den vorgenannten hydraulischen Druck in die V-Nuten 10 drängen lassen.

Wenn nun Drehschieber 1 und Steuerbuchse 2 der Servoventilanordnung relativ zueinander verdreht werden, verdreht sich auch das Buchsenteil 11 relativ zu den V-Nuten 10, mit der Folge, daß die Kugeln 15 entweder nur an den rechten oder den linken Flanken der V-Nuten 10 anliegen und entsprechend den Druckkräften, die die Kugeln 15 nach radial einwärts drängen, ein Drehmoment erzeugen, welches einer Drehverstellung von Drehschieber 1 und Steuerbuchse 2 aus deren relativer Mittellage entgegenwirkt.

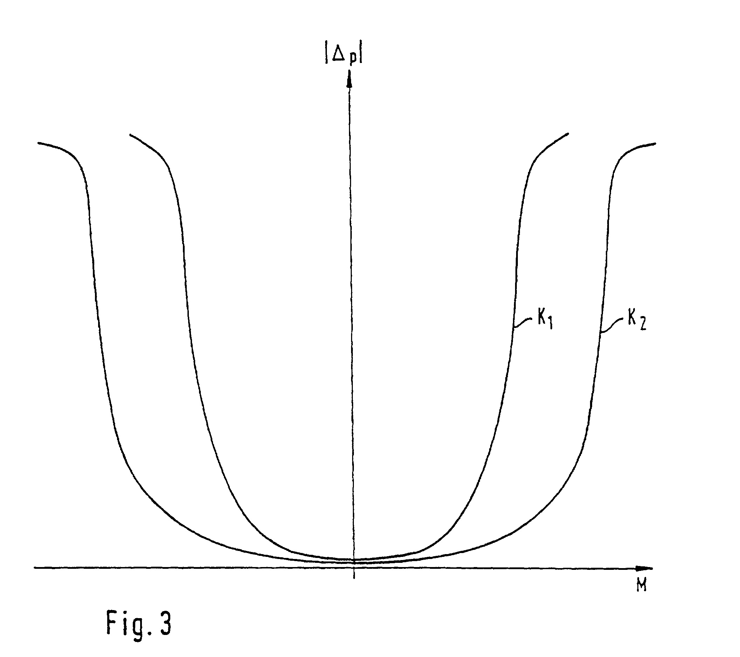

Fig. 3 zeigt nun für unterschiedliche hydraulische Drücke im Ringraum 16 den Betrag der jeweils zwischen den Motoranschlüssen 5 wirksamen Druckdifferenz Δp in Abhängigkeit von einem zwischen Drehschieber 1 und Steuerbuchse 2 übertragenen Drehmoment M. Dabei zeigt die Kurve K₁ in schematisierter Form die Verhältnisse bei verschwindendem Hydraulikdruck im Ringraum 16, wobei davon ausgegangen wird, daß Drehschieber 1 und Steuerbuchse 2 miteinander über eine Feder drehelastisch verbunden sind. Wenn zwischen Drehschieber 1 und Steuerbuchse 2 ein zunehmendes Drehmoment in der einen oder anderen Richtung wirksam ist, werden Drehschieber und Steuerbuchse 2 relativ zueinander zunehmend verdreht, mit der Folge, daß zwischen den Motoranschlüssen 5 eine progressiv zunehmende Druckdifferenz auftritt.

Die Kurve K₂ zeigt nun die Verhältnisse bei einem größeren hydraulischen Druck im Ringraum 16. Da dieser Druck die Kugeln 15 in die V-Nuten 10 hineindrückt, wird durch die Kugeln 15 im Zusammenwirken mit den Flanken der V-Nuten 10 ein entsprechender Widerstand gegen eine Relativdrehung zwischen Drehschieber und Steuerbuchse 2 erzeugt. Im Ergebnis muß dann zwischen Steuerschieber 1 und Steuerbuchse 2 ein erhöhtes Drehmoment wirksam sein, um eine nennenswerte Relativdrehung zwischen Steuerschieber 1 und Steuerbuchse 2 zu bewirken. Somit werden dann größere Druckdifferenzen zwischen den Motoranschlüssen 5 erst auftreten, wenn zwischen Steuerschieber 1 und Steuerbuchse 2 entsprechend größere Drehmomente wirksam sind.

Um Reibungsverluste und dementsprechend Hysterese-Effekte gering zu halten, ist es erwünscht, wenn die Kugeln 15 bei Relativdrehung zwischen dem Steuerschieber 1 und der Steuerbuchse 2 auf den Flanken der V-Nuten 10 abrollen. Dazu ist vorteilhaft, wenn die Flanken nur eine begrenzte Steilheit in Umfangsrichtung des Wellenabschnittes 9 aufweisen. Außerdem sollten die Durchmesser der Radialbohrungen 12 geringfügig größer als die Durchmesser der Kugeln 15 sein, so daß die Kugeln 15 in den Raldialbohrungen 12 "schwimmen", d.h. durch Hydraulikmedium von den Wandungen der Radialbohrungen 12 ferngehalten werden. Allerdings soll die Durchmesserdifferenz gering sein, so daß der Querschnitt des zwischen dem Innenumfang der Radialbohrungen 12 und den Kugeln 15 gebildete Ringspalt für das Hydraulikmedium einen sehr hohen Drosselwiderstand bildet.

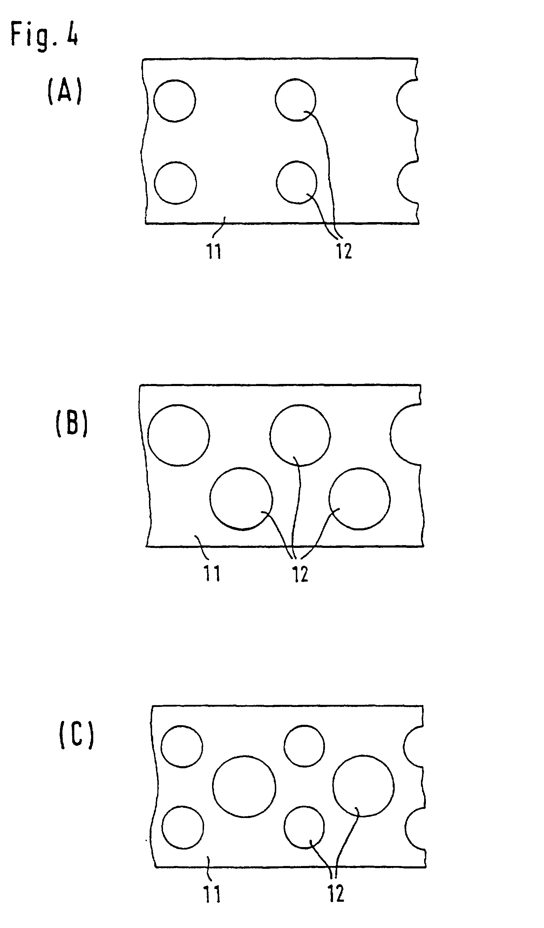

Fig. 4 zeigt nun eine Abwicklung des Buchsenteiles 11, wobei gemäß einer möglichen vorteilhaften Ausführungsform für die Radialbohrungen 12 mehrere axial zueinander versetzte Umfangsreihen vorgesehen sind.

Im Beispiel des Bildes A sind je zwei axial nebeneinander liegende Radialbohrungen 12 in einer gemeinsamen Axialebene des Buchsenteiles 11 angeordnet, so daß die zugehörigen Kugeln 15 mit einer einzigen V-Nut 10 zusammenwirken können, welche dann eine entsprechende axiale Länge aufweisen muß.

Im Beispiel des Bildes B sind die Radialbohrungen 12 zweier benachbarter Reihen in Umfangsrichtung zueinander versetzt angeordet. Damit wird die Möglichkeit geboten, den Axialabstand der beiden Reihen besonders gering zu halten. Im Wellenabschnitt 9 müssen dann entsprechend versetzt angeordnete Nuten vorgesehen sein.

Das Bild C zeigt die Möglichkeit, auch Kugeln 15 und damit Radialbohrungen 12 mit unterschiedlichen Durchmessern vorzusehen.

Durch die in Fig. 4 beispielhaft dargestellten Ausführungsformen kann die Zahl der Kugeln 15 und damit die mögliche Rückwirkungskraft bei gleichem hydraulischen Druck im Ringraum 16 erhöht werden, ohne unerwünscht steile Flanken an den V-Nuten 10 vorsehen zu müssen.

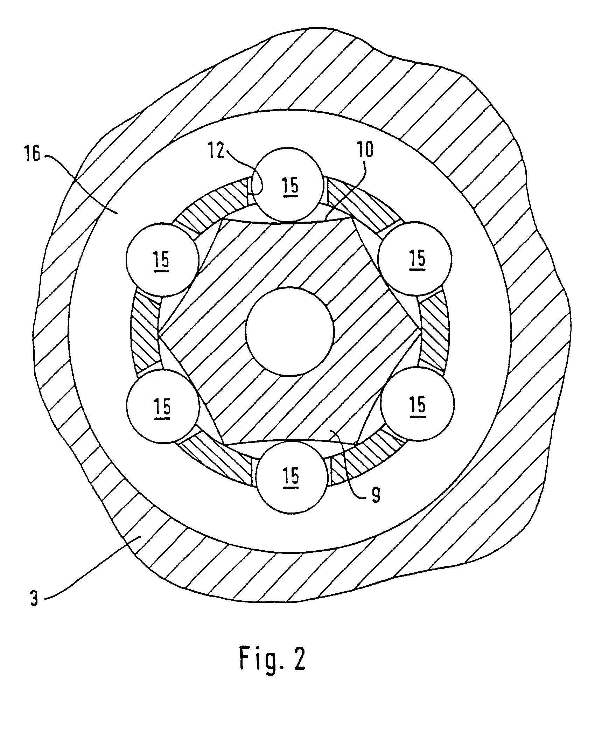

Im Beispiel der Fig. 2 sind die Nuten 10 sehr flach ausgebildet. Statt dessen ist es auch möglich und vorteilhaft, V-Nuten mit deutlich kleinerem Öffnungswinkel vorzusehen. Dabei kann die Steilheit der Flanken der Nut gegebenenfalls in Querrichtung der Nut abnehmen, d.h. die Flanken sind kugelseitig konvex ausgebildet. Jedoch ist es auch möglich, daß die Steilheit der Flanken mit zunehmendem Querabstand von der Mitte der Nut zunimmt, d.h. die Flanken der Nut sind kugelseitig konvax ausgebildet. Auf diese Weise läßt sich der Verlauf des Drehmomentes, welches durch Andruck der Kugeln gegen die Flanken der jeweiligen Nut bewirkt wird und vom Verdrehwinkel zwischen der Welle 9 und der Hülse 10 abhängt, an den jeweiligen Einsatzfall anpassen.

Gegebenenfalls kann auf diese Weise ein in hydraulischen Servolenkungen übliches Begrenzungsventil entfallen.

Der Drehschieber 1 und das Wellenteil 9 können gemäß Fig. 1 ein einstückiges Bauteil bilden. Statt dessen ist es auch möglich, eine zweiteilige Bauweise vorzusehen, wobei Drehschieber 1 und Wellenteil 9 z.B. durch Bördeln ober Schweißen oder mittels Schrauben miteinander verbunden sein können, und die relative Lage der Steuernuten 4 des Drehschiebers 1 und der Nuten 10 des Wellenteiles 9 beim Zusammenbau der Teile 1 und 9 einstellbar ist.

Die einstückige Bauweise verlangt eine hohe Präzision bei der Fertigung, erlaubt jedoch durch Wegfall von Verbindungszonen eine besonders kompakte Bauweise.

Auch eine Schweißverbindung der Teile 1 und 9 ermöglicht eine axial vergleichsweise kurze Bauweise.

## Patentansprüche

1. Rückwirkungsanordnung an einer nach Art einer Drehschieberanordnung ausgebildeten hydraulischen Servoventilanordnung, welche einen Drehschieber (1) sowie eine diesen koaxial umfassende, relativ zum Drehschieber drehbare Steuerbuchse (2) aufweist und insbesondere für Servolenkungen von Kraftfahrzeugen vorgesehen ist, mit
- einem relativ zum Drehschieber (1) drehfesten Wellenteil (9), an dem axiale Nuten (10) mit nach außen V-förmig gespreizten Flanken ausgebildet sind,
- einem relativ zur Steuerbuchse (2) drehfesten Buchsenteil (11), an dem Radialbohrungen (12) zur Radialführung von Rückwirkungskörpern (15) angeordnet sind, welche mit steuerbarem Hydraulikdruck in die Nuten (10) eindrückbar sind, und
- einem das Buchsenteil (11) umfassenden Gehäuse (3)
**dadurch gekennzeichnet,**
**daß** das Gehäuse (3) zumindest eine Radialöffnung (17) aufweist, durch die die Rückwirkungskörper (15) bei entsprechend positioniertem Buchsenteil (11) in dessen Radialbohrungen einsetzbar sind.

2. Rückwirkungsanordnung nach Anspruch 1,
**dadurch gekennzeichnet,**
**daß** Gehäuse (3) und Buchsenteil (11) relativ zueinander zwischen einer Montagelage, in der die Radialöffnung (17) sowie die Radialbohrungen (12) in einer gemeinsamen Radialebene bezüglich der Buchsenachse liegen, und einer Betriebslage axial verschiebbar sind, in der die Radialöffnung (17) zu den Radialbohrungen (12) axial versetzt ist.

3. Rückwirkungsanordnung nach Anspruch 1 oder 2,
**dadurch gekennzeichnet,**
**daß** zwischen Buchsenteil (11) und Gehäuse (3) ein Ringraum (16) vorgesehen ist, in den ein Bereich der Rückwirkungskörper (15) aus den Radialbohrungen (12) ausschiebbar ist.

4. Rückwirkungsanordnung nach Anspruch 2 oder 3,
**dadurch gekennzeichnet,**
**daß** der Ringraum (16) axial bis zur Radialöffnung (17) fortgesetzt ist bzw. einen entsprechenden Axialfortsatz aufweist.

5. Rückwirkungsanordnung nach Anspruch 3 oder 4,
**dadurch gekennzeichnet,**
**daß** der Ringraum (16) mit dem steuerbaren hydraulischen Druck beaufschlagbar ist.

6. Rückwirkungsanordnung nach einem der Ansprüche 1 bis 5,
**dadurch gekennzeichnet,**
**daß** die Nuten (10) mit einem Niederdruckanschluß bzw. Reservoir kommunizieren.

7. Rückwirkungsanordnung nach einem der Ansprüche 1 bis 6,
**dadurch gekennzeichnet,**
**daß** die Rückwirkungskörper (15) als Kugeln ausgebildet sind.

8. Rückwirkungsanordnung nach einem der Ansprüche 1 bis 7,
**dadurch gekennzeichnet,**
**daß** der Durchmesser der Radialbohrungen (12) geringfügig größer als der Durchmesser der Rückwirkungskörper (15) ist, derart, daß ein dem jeweiligen Rückwirkungskörper ringförmig umschließender Spalt mit hoher Drosselwirkung gebildet wird.

9. Rückwirkungsanordnung nach einem der Ansprüche 1 bis 8,
**dadurch gekennzeichnet,**
**daß** die Radialbohrungen (12) in mehreren Radialebenen angeordnet sind.

## Claims

1. Reaction system on a hydraulic servo valve arrangement in the form of a rotary valve assembly, having a rotary valve (1) and a control sleeve (2) coaxially enclosing the latter and rotatable relative to the rotary valve, in particular for power assisted steering systems of motor vehicles, with
- a shaft part (9) integral with the rotary valve (1) in rotation, on which axial grooves (10) with outwardly diverging V-shaped sides are provided,
- a sleeve part (11) fixed in rotation relative to the control sleeve (2), on which radial bores (12) are arranged to provide a radial guiding action for reaction elements (15), which can be pushed into the grooves (10) with a controllable hydraulic pressure, and
- a housing (3) enclosing the sleeve part (11),
**characterised in that**
the housing (3) has at least one radial orifice (17), through which the reaction elements (15) can be inserted in radial bores of the sleeve part (11) when the latter is positioned accordingly.

2. Reaction system as claimed in claim 1,
**characterised in that**
the housing (3) and the sleeve part (11) are axially displaceable relative to one another between an assembly position, in which the radial orifice (17) as well as the radial bores (12) lie in a common radial plane relative to the sleeve axis, and an operating position, in which the radial orifice (17) is axially offset from the radial bores (12).

3. Reaction system as claimed in claim 1 or 2,
**characterised in that**
an annular chamber (16) is provided between sleeve part (11) and housing (3) in which a region of the reaction element (15) can be pushed out of the radial bores (12).

4. Reaction system as claimed in claim 2 or 3,
**characterised in that**
the annular chamber (16) continues axially as far as the radial orifice (17) or has a corresponding axial continuation.

5. Reaction system as claimed in claim 3 or 4,
**characterised in that**
the controllable hydraulic pressure can be applied to the annular chamber (16).

6. Reaction system as claimed in one of claims 1 to 5,
**characterised in that**
the grooves (10) communicate with a lower-pressure connection or reservoir.

7. Reaction system as claimed in one of claims 1 to 6,
**characterised in that**
the reaction elements (15) are bearings.

8. Reaction system as claimed in one of claims 1 to 7,
**characterised in that**
the diameter of the radial bores (12) is slightly larger than the diameter of the reaction elements (15) so that an annular gap with a high throttling action is formed surrounding the respective reaction element.

9. Reaction system as claimed in one of claims 1 to 8,
**characterised in that**
the radial bores (12) are disposed in several radial planes.

## Revendications

1. Système de rétroaction sur un système de servo-valve hydraulique réalisé à la manière d'un système à tiroirs rotatifs, qui présente un tiroir rotatif (1) ainsi qu'une douille de commande (2) rotative par rapport au tiroir rotatif (1) et entourant celui-ci coaxialement, et qui est prévu en particulier pour des directions assistées de véhicules, comportant
- une partie d'arbre (9) solidaire en rotation par rapport au tiroir rotatif (1), sur laquelle sont réalisées des gorges (10) axiales avec des flancs écartés en forme de V vers l'extérieur,
- une partie de douille (11) solidaire en rotation par rapport au tiroir rotatif (1), sur lequel sont ménagés des perçages radiaux (12) pour le guidage radial de corps de rétroaction (15) qui peuvent être pressés dans les gorges (10) par une pression hydraulique commandable, et
- un boîtier (3) contenant la partie de douille (11),
**caractérisé en ce que**
le boîtier (3) présente au moins une ouverture radiale (17) à travers laquelle les corps de rétroaction (15) peuvent être insérés dans les perçages radiaux de la partie de douille (11) lorsque celle-ci est positionnée de manière correspondante.

2. Système de rétroaction selon la revendication 1, **caractérisé en ce que** le boîtier (3) et la partie de douille (11) sont déplaçables axialement l'un par rapport à l'autre entre une position de montage dans laquelle l'ouverture radiale (17) ainsi que les perçages radiaux (12) se trouvent dans un plan radial commun par rapport à l'axe de douille, et une position de fonctionnement dans laquelle l'ouverture radiale (17) est axialement décalée par rapport aux perçages radiaux (12).

3. Système de rétroaction selon l'une ou l'autre des revendications 1 et 2, **caractérisé en ce qu'**entre la partie de douille (11) et le boîtier (3) est prévu un espace annulaire (16) dans lequel une région des corps de rétroaction (15) peut être sortie hors des perçages radiaux (12).

4. Système de rétroaction selon l'une ou l'autre des revendications 2 et 3, **caractérisé en ce que** l'espace annulaire (16) est prolongé axialement jusqu'à l'ouverture radiale (17) ou présente un prolongement axial correspondant, respectivement.

5. Système de rétroaction selon l'une ou l'autre des revendications 3 et 4, **caractérisé en ce que** la chambre annulaire (16) peut être alimentée avec la pression hydraulique commandable.

6. Système de rétroaction selon l'une quelconque des revendications 1 à 5, **caractérisé en ce que** les gorges (10) communiquent avec un raccord de basse pression ou avec un réservoir.

7. Système de rétroaction selon l'une quelconque des revendications 1 à 6, **caractérisé en ce que** les corps de rétroaction (15) sont réalisés sous forme de billes.

8. Système de rétroaction selon l'une quelconque des revendications 1 à 7, **caractérisé en ce que** le diamètre des perçages radiaux (12) est légèrement supérieur au diamètre des corps de rétroaction (15), de telle sorte qu'il se forme une fente à haut effet d'étranglement entourant chaque corps de rétroaction à la manière d'un anneau.

9. Système de rétroaction selon l'une quelconque des revendications 1 à 8, **caractérisé en ce que** les perçages radiaux (12) sont agencés dans plusieurs plans radiaux.
